# EUROPEAN PATENT SPECIFICATION

(11) **EP 0 448 902 B1**
(45) Date of publication and mention of the grant of the patent: **29.05.1996**
(21) Application number: 90630239.3
(22) Date of filing: 18.12.1990
(51) Int. Cl.: C08G 81/02

(54) **Comb polymers having a halobutyl rubber backbone**
Kammpolymere mit Halobutyl-Gummi-Rückgrat
Polymères en forme de peigne ayant une chaîne principale de caoutchouc butyl halogénée

(30) Priority: 26.03.1990 US 498676
(43) Date of publication of application: 02.10.1991
(73) Proprietor: THE GOODYEAR TIRE & RUBBER COMPANY, Akron, Ohio 44316-0001 (US)
(72) Inventor: Jalics, George, Akron, Ohio 44313 (US); Bauer, Richard George, Kent, Ohio 44240 (US)
(74) Representative: Leitz, Paul

(56) References cited:
- EP-A- 0 045 816
- EP-A- 0 052 854
- GB-A- 887 887
- GB-A- 1 097 997
- JOURNAL OF POLYMER SCIENCE: PART A-1, vol. 6, no. 10, October 1968, pages 2773-2783, Interscience Publishers, New York, US; Y. MINOURA et al.: "Reaction of chlorine-containing polymers with living polymers"

## Description

### Background of the Invention

There are many potential uses for graft polymers having halobutyl rubber backbones. For instance, chlorobutyl rubber which has low air permeability and outstanding age resistance is incompatible with most rubbers commonly utilized in building tires. Chlorobutyl rubber is accordingly a highly desirable rubber for incorporation into tire compounds but is very difficult to cocure with other rubbers utilized in the tire compound. By grafting a polydiene rubber, such as polybutadiene, onto chlorobutyl rubber, the chlorobutyl rubber is compatibilized with most common rubbers utilized in building tires and can be very effectively cocured therewith.

Heretofore, it has been very difficult, if not impossible, to synthesize graft polymers having halobutyl rubber backbones. Prior attempts to graft polystyryl lithium onto chlorobutyl rubber have all resulted in failure. Prior to the subject invention, attempts to graft sidechains which are derived from diene monomers onto halobutyl rubber backbones have also resulted in enormous difficulties.

### Summary of the Invention

By practicing the techniques of this invention, sidechains derived from diene monomers can be grafted onto halobutyl rubbers. Minoura, Hironaka, Kasabo and Ueno, "Reaction of Chlorine-Containing Polymers with Living Polymers", Journal of Polymer Science, Part A-1, Vol. 6, 2773-2783 (1968) discloses a graft polymer prepared by means of the coupling reaction of chlorinated ethylene-propylene terpolymers with polystyrene utilizing a sodium-naphthalene complex as the initiator.

The present invention reveals an elastomeric polymer which is comprised of a halobutyl rubber having sidechains grafted thereto, wherein said sidechains are derived from at least one diene monomer. For example, the present invention provides a process for preparing an elastomeric polymer having a halobutyl rubber backbone and 3,4-polyisoprene sidechains, said process being comprised of reacting a halobutyl rubber with lithium terminated 3,4-polyisoprene, wherein said lithium terminated 3,4-polyisoprene was made by the polymerization of isoprene monomer in the presence of tripiperidino phosphine oxide as a modifier. Typical polyisoprene rubbers synthesized with lithium initiators having cis-isomer contents of 60% to 85% can also be grafted to halobutyl rubbers.

The subject invention also provides a process for preparing an elastomeric polymer having a halobutyl rubber backbone and high vinyl-polybutadiene or medium vinyl polybutadiene sidechains, said process being comprised of reacting a halobutyl rubber with lithium terminated high vinyl polybutadiene or medium vinyl polybutadiene, wherein the lithium terminated polybutadiene was made by the polymerization of 1,3-butadiene monomer in the presence of potassium t-amylate as a modifier at a temperature of less than 25°C.

High vinyl polybutadiene normally has a vinyl content of greater than 65%. Medium vinyl polybutadiene has a vinyl content of 35% to 60%. Unmodified lithium polybutadiene has a vinyl content of less than 15%. In most cases unmodified polybutadiene made utilizing a lithium initiator has a vinyl content which is within the range of 8% to 10%. Unmodified lithium polybutadiene will also readily react with halobutyl rubbers to produce graft polymers having halobutyl rubber backbones and unmodified polybutadiene sidechains. Unmodified lithium polyisoprene and lithium styrene-butadiene rubber (SBR) also readily react with halobutyl rubber to make comb polymers.

### Detailed Description of the Invention

A halobutyl (halogenated butyl) rubber is utilized as the backbone in the graft polymers of this invention. Butyl rubbers are made by the copolymerization of isobutylene monomer with a small quantity of isoprene monomer. Butyl rubber is accordingly comprised of repeat units which are derived from isobutylene and isoprene. Such butyl rubber typically contains from 0.5% to 5% by weight isoprene and from 95% by weight to 99.5% by weight isobutylene. Butyl rubbers more typically contain from 1 to 3 weight percent isoprene and from 97% to 99% isobutylene. The halogenated butyl rubbers utilized in accordance with this invention are prepared by halogenating such butyl rubbers. A molar ratio of the halogen to double bonds in the butyl rubber of approximately 1:1 is typically utilized in such halogenation procedures. Halobutyl rubbers can be prepared by halogenating butyl rubber with any halogen. In most cases, the butyl rubber will be halogenated with fluorine, chlorine or bromine.

In the practice of this invention chlorobutyl rubbers and bromobutyl rubbers will typically be utilized. These halobutyl rubbers will have a number average molecular weight which is within the range of 100,000 to 500,000. In most cases, it is preferred to utilize a halobutyl rubber having a molecular weight which is within the range of 300,000 to 350,000. Such halobutyl rubbers will typically contain from 50 to 100 halogen atoms per polymer chain in the rubber. In most cases, the halobutyl rubber will contain from 0.5 to 5 weight percent of the halogen. In most cases, it is preferred for the halobutyl rubber to contain from 0.75 to 3 weight percent of the halogen. It is typically most preferred for the halobutyl rubber to contain from 1% to 2% of the halogen. Such halobutyl rubbers are commercially available from Exxon Chemical Company and Polysar Limited. Such representative examples of commercially available halobutyl rubbers which can be employed include: Exxon Chlorobutyl 1065, Exxon Chlorobutyl 1066, Exxon Chlorobutyl 1068, Polysar Chlorobutyl 1240, Polysar Chlorobutyl 1255, Exxon Bromobutyl 2222, Exxon Bromobutyl 2233, Exxon Bromobutyl 2244, Exxon Bromobutyl 2255, Polysar Bromobutyl X2, and Polysar Bromobutyl 2030.

The grafting procedure required varies with the type of sidechain being grafted onto the halobutyl rubber. In other words, the conditions required for the grafting procedure will vary with the type of sidechain being grafted onto the halobutyl rubber.

Halobutyl rubbers provide low air permeability and outstanding age resistance. These are characteristics which are often sought in tire rubbers. However, the addition of halobutyl rubbers to most standard diene rubbers, such as polyisoprene and polybutadiene, by conventional techniques yields blends which exhibit improved age resistance, but which are deficient in flex, tear, tensile strength and adhesion to other higher components. Thus, it has not been possible to achieve the desired characteristics of halobutyl rubbers by simply blending them into standard tire compounds.

By utilizing the techniques of this invention, it is possible to graft polydiene rubber sidechains onto halobutyl rubbers. The elastomeric graft polymers which result can be blended into standard tire rubber compounds to attain improved air permeability and age resistance without sacrificing flex, tear, tensile strength or adhesion to other tire components. Additionally, such blends exhibit good cocurability and can be utilized in building tires which display improved traction and rolling resistance.

Lithium terminated 3,4-polyisoprene can be grafted onto halobutyl rubber. It is important for the 3,4-polyisoprene to be synthesized by the polymerization of isoprene utilizing a lithium catalyst. This will result in the 3,4-polyisoprene being lithium terminated. It is also important for the 3,4-polyisoprene to be synthesized in the presence of tripiperidinophosphine oxide as a modifier. The lithium terminated 3,4-polyisoprene made by the polymerization of isoprene in the presence of tripiperidinophosphine oxide can be readily grafted onto halobutyl rubbers by simply mixing a solution of the lithium terminated 3,4-polyisoprene into a solution containing the halobutyl rubber. This grafting reaction occurs very rapidly at ambient temperature.

High vinyl polybutadiene and medium vinyl polybutadiene sidechains can also be grafted onto halobutyl rubber utilizing the techniques of this invention. The high vinyl polybutadiene or medium vinyl polybutadiene utilized will be lithium terminated. It is accordingly synthesized with a lithium catalyst. In the case of high vinyl polybutadiene and medium vinyl polybutadiene, it is important to utilize potassium t-amylate as the modifier. Accordingly, the high vinyl polybutadiene or medium vinyl polybutadiene will be prepared by the polymerization of 1,3-butadiene monomer in the presence of potassium t-amylate. It is also important to prepare the high vinyl polybutadiene or medium vinyl polybutadiene at a polymerization temperature of less than 35°C. The polymerization temperature employed will normally be within the range of -10°C to 90°C with temperatures in the range of 10°C to 20°C being preferred. The lithium terminated high vinyl polybutadiene or lithium terminated medium vinyl polybutadiene can readily be grafted onto halobutyl rubbers. This grafting procedure can be carried out by simply mixing a solution containing the high vinyl polybutadiene or medium vinyl polybutadiene into a solution containing the halobutyl rubber. This grafting reaction occurs very rapidly at room temperature.

Unmodified polybutadiene synthesized with a lithium initiator can also be grafted onto halobutyl rubbers utilizing the techniques of this invention. This type of grafting results in the formation of comb polymers having halobutyl rubber backbones and unmodified polybutadiene sidechains which have vinyl contents of less than 15%. Such a grafting procedure can be carried out by simply mixing a solution containing the unmodified polybutadiene into a solution containing the halobutyl rubber. Unmodified polyisoprene made with a lithium initiator and SBR made with a lithium initiator can also be grafted onto halobutyl rubbers to make comb polymers.

This invention is illustrated by the following examples which are merely for the purpose of illustration and are not to be regarded as limiting the scope of the invention or the manner in which it can be practiced. Unless specifically indicated otherwise, all parts and percentages are given by weight.

### Example 1

In this experiment, a comb polymer having a chlorobutyl rubber backbone and medium vinyl polybutadiene sidechains was prepared. In the procedure used, 750 ml of a premix solution containing 15% 1,3-butadiene in hexane was charged into a quart (946 ml) polymerization bottle under nitrogen. As a modifier, 0.75 ml of a 1.1 M solution of potassium t-amylate was added. Then, 1.75 ml of a 1.3 M solution of secondary-butyl lithium in hexane was added to initiate the polymerization. The polymerization was carried out at a temperature of about 15°C for about 4 hours. Full conversion was confirmed by solids measurement. The molar ratio of the secondary-butyl lithium initiator to the potassium t-amylate was 0.27. However, in such polymerizations medium vinyl polybutadiene can be made utilizing any molar ratio of the lithium initiator to potassium t-amylate which is within the range of 0.1:1 to 1:1. In most cases, the medium vinyl polybutadiene will be synthesized using a molar ratio of lithium initiator to potassium t-amylate which is within the range of 0.15 to 0.60. The solution of the medium vinyl polybutadiene was added to 750 ml of a chlorobutyl rubber solution which contained 100 g of polymer per liter of hexane. The chlorobutyl rubber cement was previously scavenged under nitrogen with 7.5 ml of a 1.6 M solution of n-butyllithium which was diluted with 75 ml of hexane. GPC confirmed that the grafting reaction of this experiment was virtually quantitative.

### Example 2

A comb polymer having a chlorobutyl rubber backbone and 3,4-polyisoprene sidechains was made in this experiment. In the procedure employed, 625 ml of hexane, 110 g of isoprene, 4 ml of a 1.3 M solution of secondary-butyl lithium in hexane, and 8.75 ml of a 0.2 M solution of tripiperidinophosphine oxide in hexane were charged into a quart (946 ml) bottle. The polymerization was carried out at a temperature of 15°C for about 4 hours. Full conversion was confirmed by solids measurement. The molar ratio of secondary butyl lithium to tripiperidinophosphine oxide employed in this experiment was 0.3. However 3,4-polyisoprene can be made utilizing any molar ratio of lithium initiator to tripiperidinophosphine oxide which is within the range of 0.15:1 to 0.60:1. The grafting was carried out as described in Example 2. GPC showed that a very high degree of grafting was attained.

While certain representative embodiments and details have been shown for the purpose of illustrating the present invention, it will be apparent to those skilled in this art that various changes and modifications can be made therein.

## Claims

1. An elastomeric polymer which is characterized by being comprised of a halobutyl rubber having a number average molecular weight which is within the range of 100,000 to 500,000 selected from the group consisting of bromobutyl rubbers and chlorobutyl rubbers wherein said halobutyl rubber has sidechains grafted thereto, wherein said sidechains are selected from the group consisting of 3,4-polyisoprene rubber sidechains, high vinyl polybutadiene rubber sidechains having a vinyl content of greater than 65 percent, and medium vinyl polybutadiene rubber sidechains having a vinyl content of 35 to 60 percent.

2. An elastomeric polymer as specified in claim 1 characterized by the halobutyl rubber having a number average molecular weight which is within the range of 300,000 to 350,000.

3. A process for preparing an elastomeric polymer having a halobutyl rubber backbone and 3,4-polyisoprene sidechains, said process being comprised of reacting a halobutyl rubber with lithium terminated 3,4-polyisoprene, wherein said lithium terminated 3,4-polyisoprene was made by the polymerization of isoprene monomer in the presence of tripiperidino phosphine oxide as a modifier.

4. A process as specified in claim 3 characterized by the halobutyl rubber being a bromobutyl rubber.

5. A process as specified in claim 3 characterized by the halobutyl rubber being a chlorobutyl rubber.

6. A process as specified in claim 3, 4 or 5 characterized in that the halobutyl rubber has a number average molecular weight which is within the range of 100,000 to 500,000.

## Patentansprüche

1. Elastomeres Polymer, das dadurch gekennzeichnet ist, daß es einen Halogenbutyl-Kautschuk mit einem Zahlenmittel des Molekulargewichts, das innerhalb des Bereichs von 100 000 bis 500 000 liegt, ausgewählt aus der Gruppe, die aus Brombutyl-Kautschuken und Chlorbutyl-Kautschuken besteht, umfaßt, worin der Halogenbutyl-Kautschuk darauf gepfropfte Seitenketten aufweist, wobei die Seitenketten ausgewählt sind aus der Gruppe, die aus 3,4-Polyisopren-Kautschuk-Seitenketten, Seitenketten aus Polybutadien-Kautschuk mit hohem Vinylgehalt mit einem Vinylgehalt von mehr als 65 Prozent und Seitenketten aus Polybutadien-Kautschuk mit mittlerem Vinylgehalt mit einem Vinylgehalt von 35 bis 60 Prozent besteht.

2. Elastomeres Polymer wie in Anspruch 1 angegeben, dadurch gekennzeichnet, daß der Halogenbutyl-Kautschuk ein Zahlenmittel des Molekulargewichts, das innerhalb des Bereichs von 300 000 bis 350 000 liegt, aufweist.

3. Verfahren zur Herstellung eines elastomeren Polymers mit einem Halogenbutyl-Kautschuk-Grundgerüst und 3,4-Polyisopren-Seitenketten, wobei das Verfahren das Umsetzen eines Halogenbutyl-Kautschuks mit 3,4-Polyisopren mit endständigem Lithium, worin das 3,4-Polyisopren mit endständigem Lithium durch die Polymerisation von Isopren-Monomer in Gegenwart von Tripiperidinophosphinoxid als Modifiziermittel hergestellt wurde, umfaßt.

4. Verfahren wie in Anspruch 3 angegeben, dadurch gekennzeichnet, daß der Halogenbutyl-Kautschuk ein Brombutyl-Kautschuk ist.

5. Verfahren wie in Anspruch 3 angegeben, dadurch gekennzeichnet, daß der Halogenbutyl-Kautschuk ein Chlorbutyl-Kautschuk ist.

6. Verfahren wie in Anspruch 3, 4 oder 5 angegeben, dadurch gekennzeichnet, daß der Halogenbutyl-Kautschuk ein Zahlenmittel des Molekulargewichts, das innerhalb des Bereichs von 100 000 bis 500 000 liegt, aufweist.

## Revendications

1. Polymère élastomère caractérisé par le fait qu'il comprend un caoutchouc halogénobutyle possédant un poids moléculaire moyen en nombre qui se situe dans le domaine de 100.000 à 500.000, choisi parmi le groupe constitué par des caoutchoucs bromobutyle et par des caoutchoucs chlorobutyle, dans lequel des chaînes latérales sont greffées audit caoutchouc halogénobutyle, lesdites chaînes latérales étant choisies parmi le groupe constitué par des chaînes latérales de caoutchouc de 3,4-polyisoprène, par des chaînes latérales de caoutchouc de polybutadiène à teneur vinylique élevée, possédant une teneur vinylique supérieure à 65 pour cent, par des chaînes latérales de caoutchouc de polybutadiène à teneur vinylique moyenne, possédant une teneur vinylique de 35 à 60 pour cent.

2. Polymère élastomère tel que spécifié à la revendication 1, caractérisé par le fait que le caoutchouc halogénobutyle possède un poids moléculaire moyen en nombre qui se situe dans le domaine de 300.000 à 350.000.

3. Procédé pour préparer un polymère élastomère possédant un squelette de caoutchouc halogénobutyle et des chaînes latérales de 3,4-polyisoprène, ledit procédé comprenant la mise en réaction d'un caoutchouc halogénobutyle avec du 3,4-polyisoprène à terminaison lithium, dans lequel ledit 3,4-polyisoprène à terminaison lithium est préparé par polymérisation d'un monomère d'isoprène en présence d'un oxyde de tripipéridinophosphine comme agent de modification.

4. Procédé tel que spécifié à la revendication 3, caractérisé par le fait que le caoutchouc halogénobutyle est un caoutchouc bromobutyle.

5. Procédé tel que spécifié à la revendication 3, caractérisé par le fait que le caoutchouc halogénobutyle est un caoutchouc chlorobutyle.

6. Procédé tel que spécifié à la revendication 3, 4 ou 5, caractérisé en ce que le caoutchouc halogénobutyle possède un poids moléculaire moyen en nombre qui se situe dans le domaine de 100.000 à 500.000.
